(19) Europäisches Patentamt

European Patent Office

Office européen des brevets

(11) **EP 1 024 115 A2**

(12) **EUROPÄISCHE PATENTANMELDUNG**

(43) Veröffentlichungstag:
02.08.2000 Patentblatt 2000/31

(51) Int Cl.[7]: **C02F 1/46**

(21) Anmeldenummer: **99250441.5**

(22) Anmeldetag: **16.12.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **16.12.1998 DE 19859814**

(71) Anmelder: **Aqua Butzke-Werke AG**
**14974 Ludwigsfelde (DE)**

(72) Erfinder: **Kreysig, Dieter**
**13189 Berlin (DE)**

(74) Vertreter: **Pfenning, Meinig & Partner**
**Kurfürstendamm 170**
**10707 Berlin (DE)**

(54) **Verfahren zum Desinfizieren von Wasser und Vorrichtung zur Durchführung des Verfahrens**

(57) Es wird ein Verfahren zum Desinfizieren von durch eine Vorlaufleitung (1a) zu einer Verbrauchsstelle (2) zu förderndem Wasser beschrieben. Hierbei wird durch eine elektrolytische Behandlung des Wassers in einer Elektrolysezelle (9) eine gewünschte Konzentration von für die Desinfektionswirkung maßgebendem freiem Chlor erhalten. Dies erfolgt dadurch, daß ein Teil des durch die Vorlaufleitung fließenden Wassers mittels einer Bypassleitung (10, 15) abgezweigt und der elektrolytischen Behandlung unterzogen wird und anschließend vor der Verbrauchsstelle dem durch die Vorlaufleitung fließenden Wasser wieder zugemischt wird.

EP 1 024 115 A2

**Beschreibung**

Die Erfindung betrifft ein Verfahren nach dem Oberbegriff des Anspruchs 1 sowie eine Vorrichtung zur Durchführung dieses Verfahrens.

Die elektrolytische Erzeugung von desinfizierend wirkenden Spezies wie unterchlorige Säure, Sauerstoff und in Mindermengen Wasserstoffperoxid und Ozon aus Wasser selbst und nativen Wasserinhaltsstoffen hat sich für die Desinfektion von Trinkwasser und Trinkwasserinstallationen bewährt. Mittels dieses Desinfektionsverfahrens lassen sich zuverlässig nicht nur die Keimzahlen planktonischer pathogener Mikroorganismen (wie Legionellen, Pseudomonaden, atypische Mykobakterien usw.) um den für eine Desinfektion erforderlichen Reduktionsfaktor 5 (RF 5: Reduzierung der Keimzahl um 5 Zehnerpotenzen) durch deren Inaktivierung und Abtötung reduzieren, sondern auch vorhandene Biofilme im Installationssystem beseitigen.

Entscheidend für die zu erzielende Desinfektionswirkung ist, daß mit dem Betrieb einer Anlage für die elektrolytische Desinfektion die erforderliche Wirkkonzentration desinfizierender Stoffe im Wasser erzeugt oder in Wasser eingetragen und über die Einwirkdauer hinweg in erlaubten Grenzwerten konstant gehalten wird. Bezogen auf die vorgenannten Desinfizienzien betrifft dies repräsentativ die Konzentration an erzeugter unterchloriger Säure (HOCl), meßbar als Konzentrationswert "freies Chlor", wofür die Trinkwasserverordnung den Bereich (0,1 ... 0,3) mg/l vorgibt. Höhere Konzentrationen sollten kontrolliert einstellbar sein, um intervallartig "Stoßdesinfektionen" (sog. "Hochchlorungen") durchzuführen.

Anlagen für diese elektrolytische Desinfektion von Trinkwasser und trinkwasserführenden Installationen müssen variabel anpaßbar sein an die vielfältig wechselnden Bedingungen und Anforderungen im jeweiligen Objekt (Gebäude, mobile Einrichtungen), das zu behandelnde Installationssystem, an das zu lösende Problem (Desinfektions-Ziel) sowie an die qualitativen und quantitativen Wasserparameter.

Ein unter diesen Prämissen steuer- und regelbarer Anlagenbetrieb erfordert, Betriebszustände und -weise dynamisch den systemtypischen Parametern der Installation, den betriebstypischen Kenngrößen des jeweiligen Objekts und den regionaltypischen Charakteristika des zu behandelnden Trinkwassers anzupassen.

In Abhängigkeit von der Wasserhärte, weiteren mineralischen Bestandteilen im Wasser, dem Gehalt an Kohlendioxid, pH-Wert, Leitfähigkeit, Säure-/Basenkapazität und Temperatur bilden sich auf wasserkontaktierten Oberflächen mineralische Beläge, vorwiegend aus Calciumcarbonat, Calciumsulfat, Magnesiumcarbonat usw.

Derartige Schichten bilden sich auch auf den für die elektrolytische Erzeugung der Desinfizienzien mit Gleichstrom beaufschlagten Elektroden aus Titan, beschichtet mit geeigneten Edelmetall-Mischoxiden. Dies führt zu einer zunehmenden elektrolytischen Leistungsminderung und zu irreversiblen Materialzerstörungen der Elektroden bis zu deren Totalausfall. Die Intentsität und Geschwindigkeit dieser "Verkalkung" wachsen mit der Wasserhärte und der Durchflußmenge durch die Elektrolysezelle.

Diese Verkalkung der Elektroden hat, bezogen auf die Ausfällung von Calciumcarbonat, zwei wesentliche mechanistische Ursachen, nämlich eine "physikalisch-chemische" und eine "chemische" Abscheidung.

Durch Strömungswiderstände verursachte Turbulenzen und weitere strömungstechnische Effekte unterliegt das Wasser beim Durchströmen der Elektrolysezelle hydro-mechanischem Streß. Offensichtlich führt dies zu einer lokalen Störung des im erwärmten Trinkwasser temperaturabhängig ohnehin äußerst labilen Kohlensäure-Gleichgewicht, wodurch auch das Calciumhydrogencarbonat-Calciumcarbonat-Gleichgewicht gestört wird und unlösliches Carbonat auskristallisiert, sichtbar als aufwachsender Belag an allen turbulenzerzeugenden Konstruktions- und Bauteilen der Elektrolysezelle, speziell den Elektrodenkanten, Abstandshaltern usw.

$$Ca(HCO_3)_2 \longrightarrow CaCO_3 + H_2O + CO_2$$

Diese "physikalisch-chemische" Verkalkung kann nur durch mechanische Reinigung im Rahmen regelmäßiger Wartungsarbeiten beseitigt werden. Mit steigender Temperatur, insbesondere höher als 50 °C, und höherem Wasserdurchsatz durch die Elektrolysezelle verkürzen sich die Intervalle der notwendig werdenden mechanischen Reinigung erheblich.

Die "chemische" Verkalkungskomponente hat folgende Ursache: An der Katode wird Wasser unter Bildung von Wasserstoff und Hydroxidionen reduziert.

$$H_2O + e^- \longrightarrow 1/2\ H_2 + HO^-$$

Dieses alkalische Milieu im elektrodennahen Raum bewirkt eine Neutralisation des im Wasser vorhandenen, die temporäre Wasserhärte verursachenden Hydrogencarbonats unter Bildung von Carbonat, welches sich als Calciumcarbonat sofort auf der Elektrodenoberfläche ablagert.

$$HCO_3^- + HO^- \longrightarrow H_2O + CO_3^{2-}$$

Der auf diese Weise "chemisch" entstandene Kalkbelag kann - im Unterschied zur vorgenannten "physikalisch-chemisch" Ablagerung - durch Umpolen der Elektrodenbelegung und damit nahezu wartungsfrei praktisch vollständig abgetragen werden. Für diese Reversibilität im anodischen Polaritätszustand der jeweiligen Elektrode wird die im elektrodennahen Raum sich ausbildende Acidität des Milieus genutzt.

$$CaCO_3 + 2 H^+ \longrightarrow Ca^{2+} + H_2O + CO_2$$

Um einen über möglichst lange Perioden stabilen Anlagenbetrieb unter Gewährleistung der Desinfektionswirkung mit möglichst großen Wartungsintervallen zu erzielen, ist es unter dem Aspekt der Elektroden-Verkalkung erforderlich, für die reversible "chemische" Kalkablagerung auf die jeweilige Wasserqualität abgestimmte Umpolzeiten für die Elektrodenpolarität einzuhalten.

Aus der DE 196 53 696 A1 ist bereits ein Verfahren zum Desinfizieren von durch ein Leitungssystem zu zumindest einer Entnahmestelle mit schwankender Entnahmemenge zu förderndem Wasser bekannt. Bei diesem erfolgt eine elektrolytische Behandlung des Wassers in einer Warmwasserleitung, an welche die Verbraucher angeschlossen sind. Der Wasserdurchfluß durch die Warmwasserleitung und damit auch durch die Elektrolysezelle werden hierbei so eingestellt, daß gegebenenfalls alle Verbraucher mit jeweils maximaler Entnahmemenge ausreichend beliefert werden können. Auch kann die Durchflußmenge abhängig von der tatsächlich entnommenen Wassermenge erheblich schwanken. Die Anforderungen an die jeweiligen Bedingungen für eine optimale elektrolytische Desinfektion sowie an eine möglichst geringe Kalkablagerung werden daher nicht berücksichtigt.

Es ist die Aufgabe der vorliegenden Erfindung, ein Verfahren und eine Vorrichtung zum Desinfizieren von durch eine Vorlaufleitung zu den jeweiligen Verbrauchsstellen zu förderndem Wasser verfügbar zu machen, bei denen durch eine elektrolytische Behandlung des Wassers eine gewünschte Konzentration von für die Desinfektionswirkung maßgebendem freiem Chlor erhalten wird, die einerseits für alle geforderten Anwendungsfälle sowie alle vorkommenden Betriebsbedingungen die Voraussetzungen für eine optimale Desinfektion liefern und andererseits eine möglichst geringe physikalisch-chemisch bewirkte Kalkabscheidung ergeben.

Diese Aufgabe wird erfindungsgemäß für das Verfahren durch die Merkmale des Anspruchs 1 sowie für die Vorrichtung durch die Merkmale des Anspruchs 11 gelöst. Vorteilhafte Weiterbildungen des erfindungsgemäßen Verfahrens bzw. der Vorrichtung ergeben sich aus den jeweils zugeordneten Unteransprüchen.

Dadurch, daß ein Teil des durch die Vorlaufleitung fließenden Wassers aus dieser abgezweigt und der elektrolytischen Behandlung unterzogen wird und anschließend vor der Verbrauchsstelle dem durch die Vorlaufleitung fließenden Wasser wieder zugemischt wird bzw. daß eine von der Vorlaufleitung abzweigende und dieser wieder zugeführte Bypassleitung vorgesehen ist, in welche eine Elektrolysezelle eingesetzt ist, kann die elektrolytische Desinfektion in einer weitgehend laminaren Wasserströmung mit gedrosselter und auf konstant niedrigem Niveau gehaltener Durchflußmenge durchgeführt werden.

Die Effizienz einer elektrolytischen Desinfektionsanlage ist abhängig von der für die Einhaltung der Grenzwerte bzw. deren gezielte Überschreitung im Bedarfsfalle erforderlichen Menge und Konzentration elektrolytisch generierter unterchloriger Säure. Für deren Bildung an den Elektroden sind folgende durch eine geeignete Anlage steuerbare Betriebsparameter ausschlaggebend:

Spannung (U)/Stromstärke (I) des anliegenden Gleichstroms;
Chloridgehalt des elektrolytisch zu behandelnden Wassers;
Temperatur (und Druck);
Verweildauer des Wassers im elektrischen Feld zwischen den Elektroden (Durchfluß).

Mittels geeigneter Sensoren sowie Meßwerterfassung und -verarbeitung ist es möglich, die Anlage in ihrem Betrieb so zu steuern, daß sie unter allen relevanten Betriebszuständen der hygienisch zu sichernden Trinkwasserinstallation eine optimale Desinfektionsleistung erbringt. Dies erfordert jedoch in erster Linie eine zirkulations- und verbrauchsunabhängige Regelung des Durchflusses der Elektrolysezelle, was durch den Bypass-Betrieb zur mit den Verbrauchern verbundenen Wasserleitung mit entnahmebedingt stark fluktuierenden Durchflußmengen möglich ist.

Die Minimierung der elektrochemisch nicht reversiblen physikalisch-chemischen Kalkablagerung erfordert eine möglichst geringe und weitgehend laminare Durchströmung der Elektrolysezelle, was einerseits durch entsprechende konstruktive Merkmale der Elektrolysezelle selbst und deren Einbauten (Elektroden, Elektrodenhalterung, Stromzuführung, Abstandshalter usw.) derart, daß möglichst wenig Turbulenzen erzeugt werden, und andererseits ebenfalls durch den Bypass-Betrieb erreicht werden kann.

Für den praktischen Einsatz der elektrolytischen Desinfektion im Bereich Trinkwasserbehandlung innerhalb von Gebäuden und mobilen Einrichtungen bedeutet dies, eine Anlage zu benutzen, die

- im Bypass zur verbrauchsabhängig wasserführenden Vorlaufleitung installiert, eine entsprechende elektrolytische Wasserbehandlung sichert, mittels der aus Wasser und seinen nativen Inhaltsstoffen desinfizierend wirkende Spezies generiert werden, die anhand eines analytischen Parameters mit deren jeweils aktueller Desinfektionsleistung korrelierbar sind;

- unter allen Betriebszuständen des Trinkwasser-Installationssystems das Hauptdesinfiziens Chlor/un-

terchlorige Säure ("freies Chlor") innerhalb der von der Trinkwasserverordnung geforderten Grenzwerte im Wasser erzeugt, aber auch voreingestellte höhere Konzentrationen ermöglicht, um Stoß- und Grunddesinfektionen der Installation bedarfsweise kontrolliert durchzuführen;

- sowohl in Kalt- als auch in Warmwassersysteme installiert werden kann, um kontinuierlich/diskontinuierlich entnommenes Trinkwasser mengengerecht oder zirkulierendes Wasser verordnungsgemäß zu desinfizieren;

- sich in ihrer Betriebsweise veränderlichen Wasserparametern wie Temperatur, Leitfähigkeit, Chloridgehalt, Wasserhärte usw. ohne Einbuße an Desinfektionsleistung bzw. Abweichung von einzuhaltenden Grenzwerten automatisch anpassen kann; und

- Abweichungen von normalen Betriebszuständen, die nicht durch die Selbstregel-Kapazität kompensierbar sind, durch entsprechende Signale anzeigen bzw. mittels Datenübertragung in eine verfügbare Leittechnik einspeisen oder extern ausgeben und notwendige Wartung melden kann.

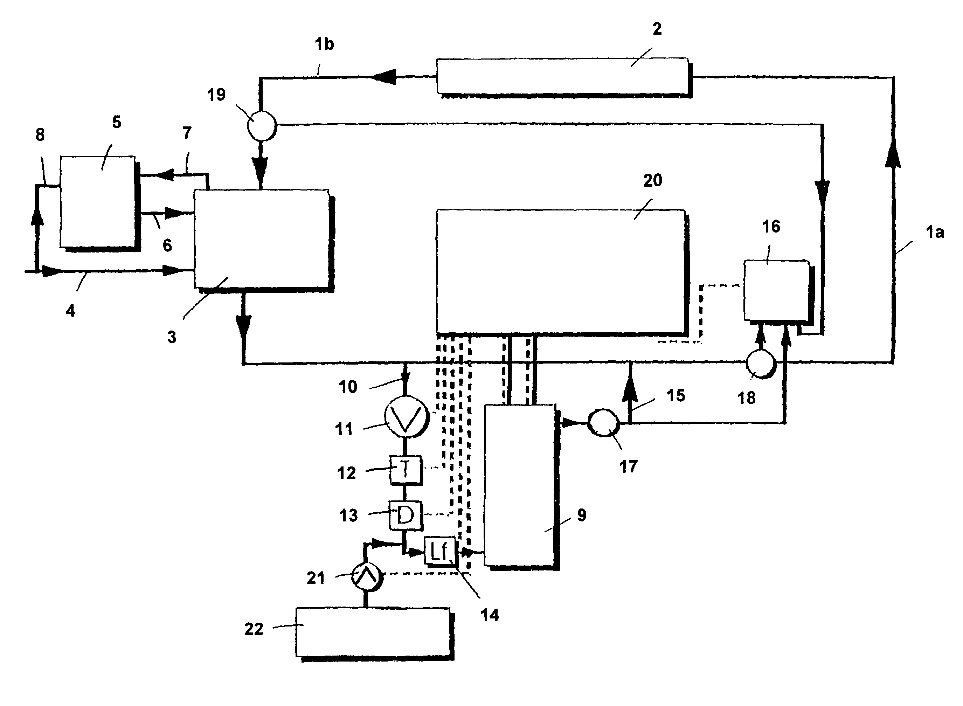

Die Erfindung wird im folgenden anhand eines in der Figur dargestellten Ausführungsbeispiels näher beschrieben. Diese zeigt in schematischer Darstellung eine warmwasserführende Leitung, die in eine Vorlaufleitung la und eine Rücklauf- oder Zirkulationsleitung 1b unterteilt ist. Zwischen der Vorlaufleitung la und der Rücklaufleitung 1b befinden sich einerseits Verbraucher 2 und andererseits eine Mischwasserstation 3. In Strömungsrichtung des Wassers befindet sich die Vorlaufleitung 1a stromabwärts der Mischwasserstation 3 und stromaufwärts der Verbraucher; und die Zirkulationsleitung 1b befindet sich stromabwärts der Verbraucher 2 und stromaufwärts der Mischwasserstation 3. Der Mischwasserstation 3 wird einerseits kaltes Wasser aus einer Trinkwasser-Zuführungsleitung 4 und andererseits warmes Wasser aus einem Trinkwassererwärmer 5 über eine Warmwasserleitung 6 zugeführt.

Aus der Mischwasserstation 3 wird Wasser mit gewünschter Temperatur in die Vorlaufleitung 1a abgegeben, und Wasser, das von den Verbrauchern 2 nicht entnommen wurde, wird durch die Zirkulationsleitung 1b in die Mischwasserstation 3 zurückgeführt. Die Vorlaufleitung 1a und die Zirkulationsleitung 1b bilden somit einen Teil eines Zirkulationssystems, dem von den Verbrauchern 2 Wasser entnommen und über die Mischwasserstation 3 eine entsprechende Menge Frischwasser wieder zugeführt wird.

Abhängig von der durch die Verbraucher 2 abgenommenen Wassermenge wird in den Trinkwassererwärmer 5 mehr oder weniger Zirkulationswasser aus der Mischwasserstation 3 über eine Leitung 7 zurückgeführt.

Die Desinfektionsanlage besteht aus einer Elektrolysezelle 9, die im Bypass zu der Vorlaufleitung 1a betrieben wird. Hierzu zweigt eine Bypassleitung 10 von der Vorlaufleitung 1a ab, in die außer der Elektrolysezelle 9 noch eine Pumpe 11, ein Temperaturmesser 12, ein Durchflußmesser 13 und ein Leitfähigkeitsmesser 14 eingesetzt sind, so daß diese von dem aus der Vorlaufleitung la abgezweigten Wasser nacheinander durchströmt werden. Die Menge des abgezweigten Wassers beträgt etwa 1/20 der durch die Vorlaufleitung la fließenden Wassermenge. Das die rohrförmige, mit mit Gleichstrom beaufschlagten Spezialelektroden versehene Elektrolysezelle 9 verlassende, mit den elektrolytisch erzeugten Desinfizienzien beladene Teilstrom-Wasser wird mittels einer Leitung 15 wieder in den Hauptstrom in der Vorlaufleitung 1a eingemischt.

Die Pumpe 11 und damit die Menge des in die Bypassleitung 10 abgezweigten Wassers sind regelbar. Die Pumpe 11 kann beispielsweise in Abhängigkeit von der jeweiligen Qualität des Wassers so gesteuert werden, daß eine maximale Chlorerzeugung oder eine minimale Kalkablagerung in der Elektrosysezelle 9 stattfindet. Auch kann die Wassermenge in der Bypassleitung 10 so geregelt werden, daß ein optimaler Kompromiß zwischen diesen beiden Forderungen erhalten wird.

Mittels einer zentralen Chlormeßeinrichtung 16 wird die Konzentration an erzeugtem freiem Chlor unmittelbar am Ausgang der Elektrolysezelle 9 (Meßpunkt 17), nach dem Einmischen in den Hauptstrom (Meßpunkt 18, entscheidend für die Einhaltung der Grenzwerte) sowie am Ende der Zirkulationsleitung 1b vor dem Wiedereintritt in die thermische Mischwasserstation 3 (Meßpunkt 19) ermittelt. Zu diesem Zweck wird das jeweilige Meßwasser, gesteuert über Magnetventile, von den Meßstellen in variablen Intervallen in für die Messung erforderlichen Volumenströmen an die Chlormeßeinrichtung 16 über Schlauchleitungen herangeführt. Alle Meßwerte werden in einer speicherprogrammierbaren Steuereinheit 20 registriert, mittels einer speziellen Software verknüpft, logisch ausgewertet und für die Steuerung der Anlage genutzt.

Mit dem am Meßpunkt 18 ermittelten Wert für die Konzentration an "freiem Chlor" wird die Elektrolysezelle 9 gesteuert: Im einfachen Fall wird bei Erreichen/Überschreiten des voreingestellten oberen Grenzwertes (z.B. 0,3 mg freies Chlor/l) die Elektrolysezelle 9 vorübergehend abgeschaltet, um sie bei Erreichen des unteren Grenzwertes (z.B. 0,1 mg freies Chlor/l) wieder einzuschalten; in sehr sensiblen Installationssystemen dagegen wird über die Regelung der spezifischen Stromdichte der Elektroden die Elektrolysezelle 9 so betrieben, daß stets ein gewählter Konzentrationsbereich in engen Grenzen eingehalten wird. Die Meßwerte werden in Intervallen ermittelt, wobei die Pausenintervalle automatisch der Drift aufeinanderfolgender Meßwerte angepaßt und dementsprechend verlängert oder verkürzt werden.

Es empfiehlt sich auch, die Differenz der Konzentrationswerte für freies Chlor zwischen den Messpunkten 18 und 19 für die Steuerung der Elektrolysezelle 9 zu berücksichtigen. Ist die Differenz relativ groß, so bedeutet die, daß die Desinfektionsleistung sehr hoch ist und die Konzentration an freiem Chlor im Bereich der Verbraucher 2 gering ist. In diesem Fall kann die Konzentration am Meßpunkt 18 beispielsweise auf 0,4 mg freies Chlor/l erhöht werden. Ist demgegenüber die Differenz relativ klein, d.h. der Desinfektionsbedarf niedrig, kann die Konzentration am Meßpunkt 18 z.B. auf 0,2 mg freies Chlor/l gesenkt werden.

Da die elektrolytische Erzeugung des Hauptdesinfizienzes Chlor/unterchlorige Säure ursächlich von der a priori im zu desinfizierenden Wasser vorhandenen Chloridionen-Konzentration abhängt und bei Werten kleiner als 20 mg/l nicht mehr effizient verläuft, wird durch den Leitfähigkeitsmesser 14 die Leitfähigkeit, der Repräsentativ-Wert für diese Konzentration, kontinuierlich gemessen. Bei Unterschreiten eines voreingestellten Wertes der Leitfähigkeit wird durch die Steuereinheit 20 eine Dosierpumpe 21 zugeschaltet, die aus einem Vorratsbehälter 22 Kochsalzsole bis zum stabilen Einstellen des gewählten oberen Grenzwertes für die Chloridionen-Konzentration in das Teilstrom-Wasser injiziert, wobei durch das Mengenverhältnis des Wassers im Teilstrom einerseits und im Hauptstrom andererseits in jedem Falle gewährleistet ist, daß nach der elektrolytischen Behandlung des chloridangereicherten Teilstrom-Wassers und dessen Einmischen in den Hauptstrom die für Trinkwasser vorgeschriebenen Grenzkonzentrationen an Natrium- und Chloridionen bei den Verbrauchern 2 nie überschritten werden. Diese Dosiereinrichtung ist unumgänglich bei Installation der elektrolytischen Desinfektionsanlage in Regionen mit naturgemäß chloridarmem oder mit stark schwankenden Konzentrationswerten auftretendem Wasser bzw. in Regionen, die mit unterschiedlich und wechselnd zusammengesetzten Mischwässern versorgt werden.

Schadensfälle in der Gebäudeinstallation können zu einer nicht sofort bemerkbaren kürzer- oder auch längerfristigen Unterbrechung des Wasserflusses im Installationssystem führen. In einem solchen Fall würde die Desinfektionsanlage nicht mehr oder zumindest nicht ausreichend durchflossen werden, wodurch vor allem die Spezialelektroden und die Elektrolysezelle 9 insgesamt bis zum Funktionsverlust geschädigt werden könnten. Der kontinuierlich arbeitende Durchflußmesser 13 signalisiert die aktuellen Werte der Durchflußmengen zur Steuerung der Pumpe 11, so daß bei Unterschreiten eines voreingestellten Minimalwertes die Stromversorgung der Elektrolysezelle 9 vorübergehend unterbrochen und damit deren Schädigung verhindert werden kann.

In speziellen Fällen ist es erforderlich, die elektrolytische Desinfektion in Kombination mit einer periodisch zu wiederholenden thermischen Desinfektion des Trinkwasserversorgungssystems zu betreiben. Eine solche thermische Desinfektion erfordert das Durchströmen des gesamten Installationssystems mit auf mindestens 80 °C Vorlauftemperatur vorgeheiztem Wasser, bis alle wasserkontaktierten Innenoberflächen der Installation für eine Zeit von mindestens drei Minuten eine Temperatur von mehr als 70 °C angenommen haben. Würde dieses heiße Wasser die erforderliche längere Zeit durch die Elektrolysezelle 9 fließen, wären deutliche Verkürzungen der Lebensdauer der Spezialelektroden und empfindliche Funktionseinbußen die Folge. Mittels des Temperaturmessers 12 wird die Temperatur des Wassers kontinuierlich gemessen. Bei Überschreiten eines voreingestellten Maximalwertes erfolgt daher zwecks Überhitzungsschutz eine vorübergehende Abschaltung der Pumpe 11 und der Stromzufuhr zur Elektrolysezelle 9.

Sämtliche Meßwerte, Steuersignale und Regelvorgänge werden intern über eine Zeit von z.B. 48 Stunden gespeichert und dann automatisch zu einem angeschlossenen Rechner (Leittechnik, Gebäudeleitzentrale, Servicestation usw.) übertragen und sind dort für die weitere Auswertung oder aktenkundigen Protokollierung verfügbar. Auch können per Modem die jeweiligen Betriebszustände und Anlagenparameter - auch verarbeitet als Warn- und Wartungssignale - fernabgefragt werden, so daß eine durchgehende Kontrolle der Funktion der Anlage insbesondere in einem gesundheitlich sensiblen Bereich gewährleistet ist und anstehende Wartungsarbeiten sowie drohende Funktionsstörungen rechtzeitig erkannt und durch einzuleitende Wartungsarbeiten abgewendet werden können.

**Patentansprüche**

1. Verfahren zum Desinfizieren von durch eine Vorlaufleitung (1a) zu einer Verbrauchsstelle (2) zu förderndem Wasser, bei dem durch eine elektrolytische Behandlung des Wassers eine gewünschte Konzentration von für die Desinfektionswirkung maßgebendem freiem Chlor erhalten wird, **dadurch gekennzeichnet,** daß ein Teil des durch die Vorlaufleitung (1a) fließenden Wassers aus dieser abgezweigt und der elektrolytischen Behandlung unterzogen wird und anschließend vor der Verbrauchsstelle (2) dem durch die Vorlaufleitung (1a) fließenden Wasser wieder zugemischt wird.

2. Verfahren nach Anspruch 1, dadurch gekennzeichnet, daß das Wasser während der elektrolytischen Behandlung eine möglichst laminare Strömung aufweist.

3. Verfahren nach Anspruch 1 oder 2, dadurch gekennzeichnet, daß die elektrolytische Behandlung des Wassers im Bypass zur Vorlaufleitung (1a) einer als Zirkulationssystem ausgelegten Trinkwasserversorgungseinrichtung erfolgt.

4. Verfahren nach einem der Ansprüche 1 bis 3, dadurch gekennzeichnet, daß die Konzentration des freien Chlors in dem durch die Vorlaufleitung (1a) fließenden Wasser nach der Zumischung des elektrolytisch behandelten Wassers und damit vor der Verbrauchsstelle (2) gemessen wird.

5. Verfahren nach Anspruch 4, dadurch gekennzeichnet, daß zusätzlich die Konzentration des freien Chlors in dem elektrolytisch behandelten Wasser vor dessen Zumischung zu dem in der Vorlaufleitung (1a) fließenden Wasser und/oder in dem in der Zirkulationsleitung (1b) fließenden Wasser hinter der Verbrauchsstelle (2) gemessen wird.

6. Verfahren nach einem der Ansprüche 1 bis 5, dadurch gekennzeichnet, daß die Intensität der elektrolytischen Behandlung in Abhängigkeit von den gemessenen Werten der Konzentration des freien Chlors gesteuert wird.

7. Verfahren nach Anspruch 6, dadurch gekennzeichnet, daß die Intensität der elektrolytischen Behandlung zusätzlich in Abhängigkeit von der Differenz der zwischen den am Wasser in der Vorlaufleitung (1a) und den am Wasser in der Zirkulationsleitung (1b) gemessenen Konzentrationswerte des freien Chlors gesteuert wird.

8. Verfahren nach einem der Ansprüche 1 bis 7, dadurch gekennzeichnet, daß die Leitfähigkeit des abgezweigten Wassers zur Ermittlung von dessen Chloridionen-Konzentration gemessen wird.

9. Verfahren nach Anspruch 8, dadurch gekennzeichnet, daß in Abhängigkeit von der gemessenen Leitfähigkeit eine Zugabe von Chlorid zu dem abgezweigten Wasser gesteuert wird.

10. Verfahren nach einem der Ansprüche 1 bis 9, dadurch gekennzeichnet, daß die Temperatur und/oder die Durchflußmenge des abgezweigten Wassers gemessen und die elektrolytische Behandlung des Wassers in Abhängigkeit von den gemessenen Werten der Temperatur und/oder der Durchflußmenge durchgeführt werden.

11. Vorrichtung zur Durchführung des Verfahrens nach einem der Ansprüche 1 bis 10, dadurch gekennzeichnet, daß eine von der Vorlaufleitung (1a) abzweigende und dieser wieder zugeführte Bypassleitung (10, 15) vorgesehen ist, in welche eine Elektrolysezelle (9) eingesetzt ist.

12. Vorrichtung nach Anspruch 11, dadurch gekennzeichnet, daß die Bypassleitung (10, 15) eine Pumpe (11) enthält zur Erzielung eines regelbaren Durchflusses durch die Bypassleitung (10, 15).

13. Vorrichtung nach Anspruch 112, dadurch gekennzeichnet, daß die Pumpe (11) so steuerbar ist, daß in Abhängigkeit von der Wasserqualität eine maximale Chlorproduktion in der Elektrolysezelle (9) erzielt wird.

14. Vorrichtung nach Anspruch 12, dadurch gekennzeichnet, daß die Pumpe (11) so steuerbar ist, daß in Abhängigkeit von der Wasserqualität eine minimale Kalkablagerung an den Elektroden der Elektrolysezelle (9) gewährleistet ist.

15. Vorrichtung nach einem der Ansprüche 11 bis 14, dadurch gekennzeichnet, daß eine Dosiereinrichtung (21, 22) vorgesehen ist für die Einleitung eines Chlorids, bevorzugt Natriumchlorid (Kochsalz), in die Bypassleitung (10, 15).

16. Verfahren nach einem der Ansprüche 11 bis 15, dadurch gekennzeichnet, daß Meßstellen (17, 18, 19) für die Messung der Konzentration von freiem Chlor in der Bypassleitung (10, 15), hinter der Elektrolysezelle (9) und an beliebigen signifikanten Stellen in der Vorlaufleitung (1a) und der Zirkulationsleitung (1b), zumindest aber hinter der Zusammenführung von Vorlaufleitung (1a) und Bypassleitung (10, 15) vorgesehen sind.

17. Vorrichtung nach Anspruch 16, dadurch gekennzeichnet, daß das Messwasser für die Messung des freien Chlors an den Messstellen (17, 18, 19) entnehmbar und einem vorzugsweise in der Elektrolyseanlage integrierten, zentralen Meßgerät (16) unmittelbar zuführbar ist.

18. Vorrichtung nach Anspruch 17, dadurch gekennzeichnet, daß das Messwasser dem zentralen Meßgerät (16) mittels Magnetventilen zeitgesteuert von den einzelnen Messstellen (17, 18, 19) zuführbar ist.

19. Vorrichtung nach einem der Ansprüche 11 bis 18, dadurch gekennzeichnet, daß ein Temperatur- (12) und/oder Durchflußmesser (13) und/oder ein Leitfähigkeitsmesser (14) in der Bypassleitung (10, 15) vorgesehen sind.